Europäisches Patentamt

European Patent Office

Office européen des brevets

(19)

(11) Publication number: 0 402 303

A1

## (12) EUROPEAN PATENT APPLICATION

(21) Application number: 90630116.3

(22) Date of filing: 08.06.90

(51) Int. Cl.5: B60C 11/00, B60C 3/04, B60C 1/00

(30) Priority: 09.06.89 US 363811

(43) Date of publication of application:
12.12.90 Bulletin 90/50

(84) Designated Contracting States:
DE FR GB IT

(71) Applicant: THE GOODYEAR TIRE & RUBBER
COMPANY
1144 East Market Street
Akron, Ohio 44316-0001(US)

(72) Inventor: Halasa, Adel Farhan
5040 Everett Road
Bath, Ohio 44210(US)
Inventor: Bergh, Jean
8A, Rue Victor Hugo,
L-9414 Vianden(LU)
Inventor: Fourgon, Fernand Antoine Joseph
9A Chemin de Musy
B-6650 Bastogne(BE)
Inventor: Graas, Maurice
41 Rue d'Orchimont
L-2268 Luxemburg(LU)
Inventor: Hitzky, Leo Joseph
29 Rue des Pres,
L-7246 Walferdange(LU)

(74) Representative: Weyland, J.J. Pierre
Goodyear Technical Center-Luxembourg
L-7750 Colmar-Berg(LU)

(54) Pneumatic tire.

(57) A pneumatic tire has a radial ply carcass structure (11) and an aspect ratio in the range of .35 to .65. The tire has a directional type tread design, and in a preferred embodiment employs a particular tread pitching arrangement and a particular type of tread compound. The tire has a greater tread radius ($TR_1$) in a central portion (CP) of the tread than the tread radii ($TR_2$, $TR_3$ in the other portions ($OP_1$,$OP_2$) of the tread.

FIG. 4

EP 0 402 303 A1

## PNEUMATIC TIRES

The present invention relates generally to pneumatic tires, and more specifically to pneumatic tires intended for use on high performance vehicles such as sports cars. Known high performance tires are not entirely satisfactory in levels of noise generated by the tires and performance on wet surfaces. As used herein, a "high performance" tire is a tire which has a speed rating of V or Z (a speed rating of V is up to 149 miles per hour and a speed rating of Z is over 149 miles per hour). Tires according to the invention exhibit lower noise generation, improved wet traction and braking, and improved aquaplaning when compared to a commercially available high performance tire which is the industry benchmark.

The features of the present invention which are believed to be novel are set forth with particularity in the appended claims. The present invention, both as to its structure and manner of operation, may best be understood by reference to the following detailed description, taken in accordance with the accompanying drawings in which:

Fig. 1 is a perspective view of a tire according to the preferred embodiment of the invention;

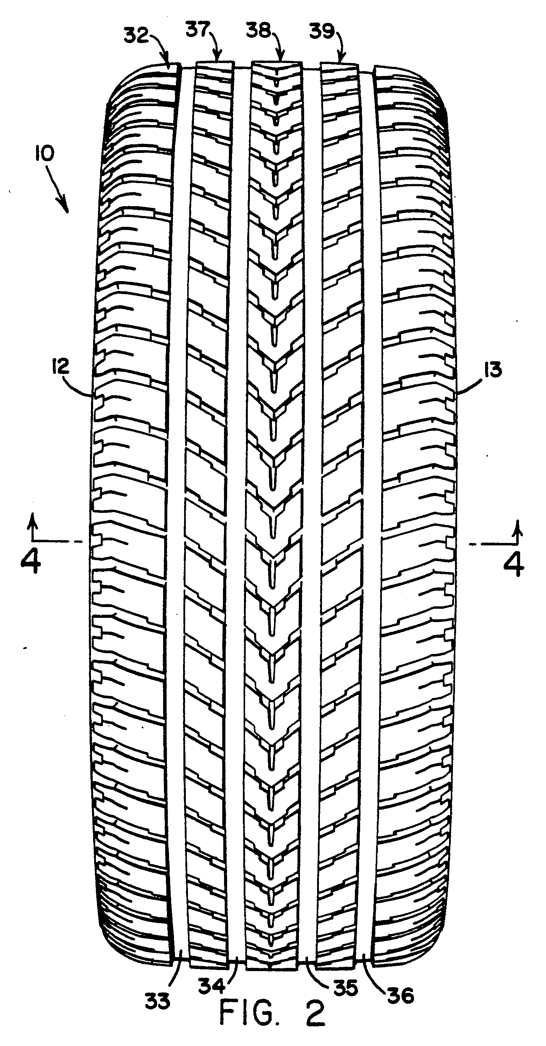

Fig. 2 is a front plan view of the tire shown in Fig. 1;

Fig. 3 is an enlarged front plan view of a portion of the tread of the tire shown in Fig. 1;

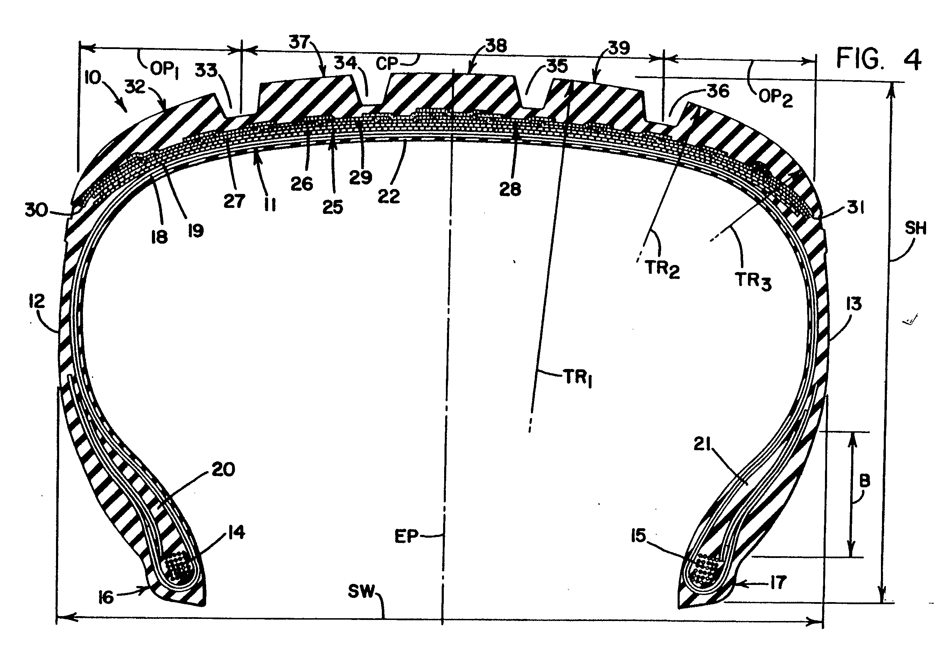

Fig. 4 is a cross sectional view of the tire of Fig. 1, taken along line 4-4 of Fig. 2; and

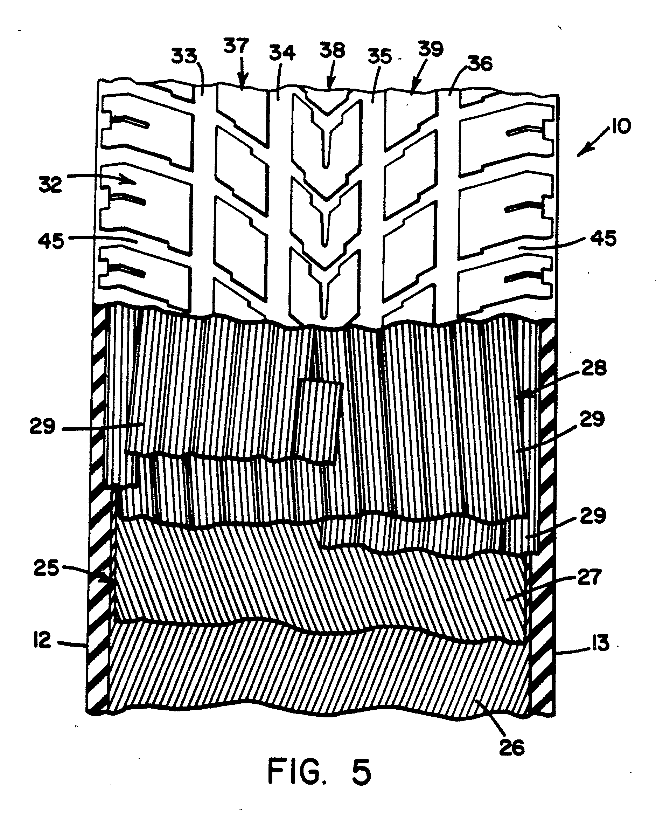

Fig. 5 is an enlarged front plan view of a portion of the tire with components of the tire removed in a stepped-off manner to show the internal construction of the tire.

A pneumatic tire according to the invention is a high performance tire having an aspect ratio $\frac{SH}{SW}$ in in the range of .35 to .65, preferably in the range of .40 to .60, and most preferably of about .50. As used herein, the "aspect ratio" of a tire means the ratio of its section height SH to its section width SW. As used herein, "section width" means the maximum linear distance parallel to the axis of the tire and between the exterior of its sidewalls when and after it has been inflated at normal pressure for twenty-four hours, but unloaded, excluding elevations of the sidewalls due to labeling, decoration or protective bands.

A tire 10 in accordance with a preferred embodiment of the invention is a high performance tire and has what is commonly referred to in the tire art as a radial ply carcass structure 11. For the purpose of the present invention, a tire has a radial ply carcass structure when the reinforcing cords of the carcass ply, or plies, are oriented at angles in the range of $75°$ to $90°$ with respect to the equatorial plane EP of the tire.

As used herein, "radial" and "radially" refer to directions perpendicular to the axis of rotation of a tire, and "axial" and "axially" refer to directions parallel to the axis of rotation of a tire. A plane which is perpendicular to the axis of rotation of a tire and is midway between the sidewalls 12,13 of the tire is the "equatorial plane".

A tire according to the invention has a pair of axially spaced apart annular beads 14,15 which are substantially inextensible. Each of the beads is located in a bead portion 16,17 having exterior surfaces which are shaped to mate with, and be complementary to, the bead seats and retaining flanges of a rim (not shown) which is specified for use with the tire by an organization which sets industrial standards for tires and rims. Such organizations include The Tire & Rim Association, Inc., The European Tyre & Rim Technical Organisation, and The Japan Automobile Tire Manufacturer Association.

In a preferred embodiment the radial ply carcass structure 11 comprises two carcass plies 18,19 of side-by-side rayon cords embedded in a suitable elastomeric substance. Each of the carcass plies 18,19 extends between the beads 14,15 and one of its axially outer portions folded radially and axially outwardly about each bead. Preferably, an annular elastomeric member 20,21 having a modulus of at least 10 MPa at 200% elongation and a Shore A hardness of 90 is disposed inside of each of said carcass ply folds and has a radial extent B of at least 15% of the section height SH of the tire in order to provide enhanced lateral stability to the tire. While in the preferred embodiment, the carcass structure comprises two rayon carcass plies, it is understood that any number of plies of suitable material may be employed without deviating from the scope of the present invention. For example, in a preferred embodiment, some sizes of tires, the carcass structure comprise a single carcass ply of polyester cords.

Preferably, a tire according to the present invention is a tubeless tire having a layer 22 of a low permeability material disposed inwardly of the carcass structure 11. A belt structure 25 comprising one or more belt plies 26,27 having reinforcing elements oriented at angles in the range of $15°$ to $30°$ with respect to the equatorial plane EP of the tire is disposed radially outwardly of the carcass structure 11 in a crown region of the tire. While in the preferred embodiment the belt structure comprises two unfolded belt plies of steel cords, it is understood that any suitable combination of folded and unfolded belt plies, of any suitable material, may be employed without deviating from the scope of the present invention. Tires according to a preferred embodiment of the invention may employ, for example, wire cables of 2+2 or 2x.30 high tensile wire structures at about 28 cables per inch density.

One of the problems which has been encountered when radial ply tires are operated at high speeds is belt edge separation, in which the axial edges of the belt structure 25 are physically pulled away from the carcass ply structure 11. In order to reduce, and hopefully prevent, this phenomena it is known in the tire art to employ a means 28 for restricting the displacement of the axial edges of the belt structure in a radially outward direction. Such a restricting means is commonly referred to in the art as an "overlay" structure, and may comprise heat shrinkable cords of nylon, or another suitable material, extending substantially parallel to the equatorial plane of the tire and located radially outwardly of at least one belt ply. Any number of means for restricting the edges of a belt structure are known in the art, and it is believed that any such means for restricting which is suitable could be employed in a tire according to the present invention without deviating from the scope of this invention. However, in a preferred embodiment the means for restricting comprises a series of helical convolutions of a ribbon 29 which comprises an elastomeric material reinforced by side-by-side cords extending longitudinally of the ribbon. More preferably, the adjacent turns of the ribbon are in an overlapping relationship, and if desired the degree of overlap may vary across the axial width of the overlay. Most preferably, the overlay structure has an axial width that is at least equal to the axial width of the belt structure, said overlay structure comprising a series of helical convolutions of a single continuous ribbon which comprises an elastomeric material reinforced by textile cords arranged side-by-side and extending longitudinally of the ribbon, said single ribbon having a pair of ends with both of said ends being located in close proximity to the equatorial plane of the tire, and the number of radial layers of cords in the overlay structure being greater at the axial edges 30,31 of the belt structure than the average number of radial layers of cords in the remainder of the overlay structures. Such an overlay structure is disclosed in commonly owned United States Patent Application       filed on       .
Such a means for restricting has the advantage of providing greater restrictive force at the belt edges while having no edges of the ribbon in the area of the belt edges.

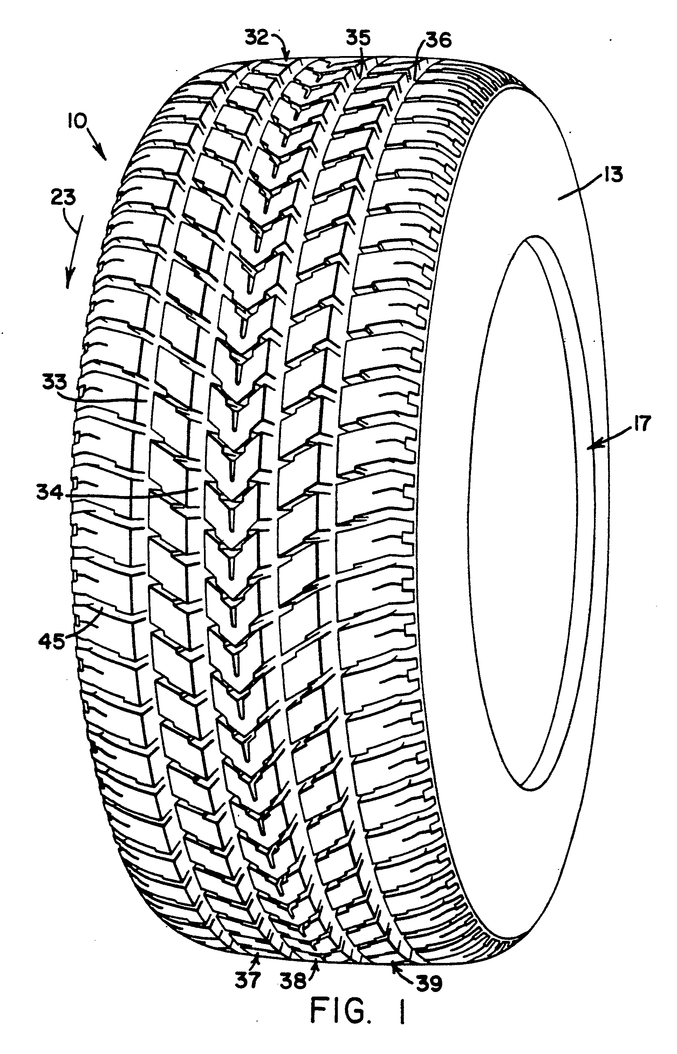

A ground engageable tread 32 of an elastomeric substance is disposed radially outwardly of the carcass structure 11, belt structure 25, and means for restricting 28, and extends circumferentially thereabout. A tire according to a preferred embodiment has a directional tread design. It is generally recognized in the tire art that a tire with a directional tread design has lower noise generation characteristics, when rotated in the direction that it is designed to rotate in, than a tire having a non-directional tread design. As used herein, a "directional tread design" is a tread structure that is intended to operate more efficiently when rotated in one direction than in the opposite direction, and a "non-directional tread design" is a tread structure that is intended to operate with equal efficiency regardless of the direction in which it is rotated. A pneumatic tire according to the most preferred embodiment is intended to operate most efficiently when rotated in the direction indicated by arrow 23 in Fig. 1.

The tread 32 has at least four grooves 33,34,35,36 therein which extend circumferentially thereabout, with at least one of the circumferentially extending grooves disposed on each side of the equatorial plane EP. In the preferred embodiment, there are four 33,34,35,36 circumferentially extending grooves in the tread, two on each side of the equatorial plane EP. The circumferentially extending grooves preferably are straight grooves. A central portion CP of the tread is disposed between the centerlines of the axially outermost circumferentially extending grooves 33,36 on each side of the equatorial plane EP. The tire has a first tread radius $TR_1$ in the central portion of the tread, and portions $OP_1,OP_2$ of the tread which are disposed axially outwardly of the central portion CP have tread radii $TR_2,TR_3$ that are not greater than 25% of said first tread radius. The central portion CP of the tread has an axial width in the range of 40% to 60% of the tread width TW, preferably 45% to 55% of the tread width, and most preferably about 50% of the tread width. As used herein, "tread width" refers to the greatest axial width of a static footprint of a tire when the tire is mounted upon its specified rim and inflated to its specified inflation pressure and subjected to its rated load for said inflation pressure, as specified by the appropriate trade organization's industrial standards. (Said trade organizations having been named in the foregoing text.) For example, in a tire according to the invention of size 225/60 R16 the tread radius $TR_1$ in the central portion of the tire is 744 mm (29.29 inches), and in the laterally outer portions $OP_1,OP_2$ the tread radii $TR_1$ is 157 mm (6.18 inches) merging into another tread radius of only 35 mm (1.38 inches). If desired, the laterally outer portions $OP_1,OP_2$ may comprise only one tread radius or more than two tread radii.

Each pair 33,34;34,35;35,36 of axially next adjacent circumferentially extending grooves have a circumferentially extending array 37,38,39 of traction elements 40A,40B,40C; 41A,41B,41C; 42A,42B,42C located therebetween. The tread 32 has a series of laterally extending grooves 45 therein which each extend from the equatorial plane EP of the tire to both of the sidewall portions 12,13 of the tire, and follows a path that is oriented at progressively greater angles with respect to said equatorial plane EP as the axial distance from the equatorial plane becomes greater. That is to say, each of the laterally extending grooves

3

45 follows a path having a "V" shaped centerline with the vertex of the "V" located substantially at the equatorial plane EP. This feature of a preferred embodiment endows the tread with directional operating characteristics.

In order to improve noise characteristics of the tire, it is preferred that for each of said arrays of traction elements the ratio of the number of traction elements in the array to the number of meters in the greatest circumference of the tire at its equatorial plane EP when the tire is mounted upon its specified rim and inflated to its specified inflation pressure, but not subjected to any load, is in the range of 30 traction elements per meter of tire circumference to 45 traction elements per meter of tire circumference.

Preferably, in order to enhance the noise generation characteristics of the tire, each of the circumferentially extending arrays of traction elements has repeating design cycles placed continuously about the circumference of the tire, said design cycles having a total of three different lengths including a short length, a medium length, and a long length that define a percent variation and percent unbalance, the product of the percent variation and percent unbalance lying in the range of 1,250 to 1,323. The percentage of unbalance is defined by the following formula:

$$\% \text{ Unbalance} = \frac{(L-M) - (M-S)}{(M-S)} \times 100$$

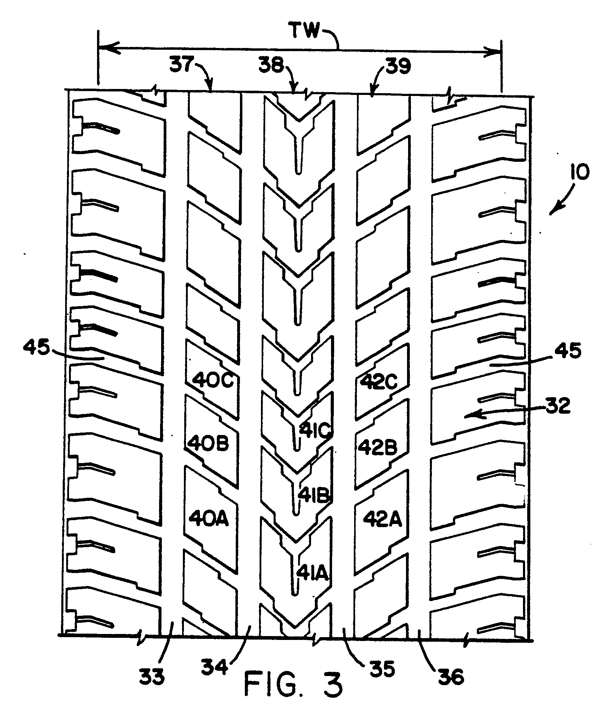

wherein L is the large pitch ratio term, M is the medium pitch ratio term, and S is the small pitch ratio term in a three-pitch tire. In a tire according to the invention, the circumferential lengths of the traction elements correspond roughly to the lengths of the design cycles. That is to say, as best shown in Fig. 3, that traction elements 40A, 41A and 42A are long design cycles; traction elements 40B,41B and 42B are medium design cycles; and traction elements 40C,41C and 42C are short design cycles. As used herein, pitch ratios of three-pitch tires are expressed as three integers that cannot be reduced to three lesser integers by a common divisor. In a tire according to the preferred embodiment, the ratio of the three discrete sizes is 17-21-26, which has a percent variation of 52.9, a percent unbalance of 25.0 and a product of percent variation and percent unbalance of 1,323. A tire tread having these characteristics has superior noise control and enables the noise to be spread over a broad band of frequencies. Such a tire tread is disclosed in commonly owned United States Patent 4,823,853 issued April 25, 1989.

In the preferred embodiments, the tread of the tire comprises an elastomeric compound containing a terpolymer rubber of styrene, isoprene and butadiene (SIBR). While the precise chemical structure of SIBR is not totally understood at this time, it has been observed that its inclusion in the elastomeric compound of a tire tread provides enhanced characteristics as a desirable combination of rolling resistance, skid resistance and treadwear. One especially advantageous feature of treads containing SIBR is that chosen characteristics of the material can be accentuated depending upon the desires of a vehicle manufacturer or other user of the tire.

The tread of a tire according to the most preferred embodiment comprises an elastomeric compound which comprises a sulfur cured rubber composition comprised of, based on 100 parts by weight rubber (phr), (A) about 10 to about 90 parts by weight of a styrene, isoprene, butadiene terpolymer rubber (SIBR), and (B) about 70 to about 30 weight percent of at least one of cis 1,4-polyisoprene rubber and cis 1,4-polybutadiene rubber wherein said SIBR rubber is comprised of (A) about 5 to about 40 weight percent bound styrene, (B) about 20 to about 60 weight percent bound isoprene and (C) about 10 to about 50 weight percent bound butadiene and is characterized by having a glass transition temperature (Tg) in the range of about -70°C to about -5°C and, further, the said bound butadiene structure contains about 10 to about 50 weight percent 1,2-vinyl units, the said bound isoprene structure contains about 10 to about 40 weight percent 3,4 units, and the sum of the weight percent 1,2-vinyl units of the bound butadiene and the weight percent 3,4 units of the bound isoprene is in the range of about 20 to about 90 percent. Such a tread compound is disclosed in commonly owned U.S. Patent Application Serial Number 07/213,019 filed on June 29, 1988.

In the description of this invention, the cis 1,4-polyisoprene rubber includes both natural and synthetic rubber. Often, the natural rubber is preferred. The cis 1,4-polyisoprene rubber, natural or synthetic, typically has a cis 1,4-content of about 96 to about 99 weight percent.

The polybutadiene rubber can be composed of about 95 percent or more of cis 1,4 structure when prepared with Ziegler-type catalyst or can be composed at least about 90 percent cis and trans 1,4 structure when prepared with alkyl lithium catalyst. Both types of rubbers are well known.

The terms butadiene and polybutadiene as used herein refer to 1,3-butadiene and polymers derived from 1,3-butadiene, respectively.

The terms bound styrene, bound butadiene and bound isoprene refer to the structure of such materials when they have been terpolymerized to form the SIBR terpolymer.

The percent 1,2 vinyl units of the bound butadiene is based on the bound butadiene itself and the percent 3,4 units of the bound isoprene is based on the bound isoprene itself and the sum thereof is in the sum of such percentages.

The rubbers used herein, particularly those in the higher ML-4 (Mooney) viscosity range, can optionally be individually oil extended before or during mixing with various rubber compounding materials for ease of processing. If oil extension is used, usually about 10 to about 50 phr of rubber processing oil is used, usually of the aromatic or aromatic/paraffinic oil type, to provided a ML-4 (100°C) viscosity of about 40 to about 100, preferably about 60 to about 90, for the uncured rubber composition.

## EXAMPLE

In order to illustrate the advantages of using such a tread compound, pneumatic tires of conventional construction (grooved tread, sidewalls, spaced beads, and supporting fabric-reinforced carcass) were built, shaped and cured in a conventional tire mold. These tires did not necessarily employ aspects of the present invention other than the SIBR trad compound. The tread was built onto the uncured carcass as a pre-extruded element. The tires were of the P195/75R14 type which indicates that they were belted, radial ply passenger type tires.

One tire is identified herein as Control X and experimental tires identified as Experimental Y and Experimental Z.

Control tire X had a tread composed of (A) 50 phr butadiene/styrene rubber and (B) 50 phr natural rubber and is intended to represent a somewhat conventional passenger tire tread.

Experimental tires Y and Z had a tread composed of (A) SIBR having a Tg in the range of about -40°C, and (B) natural rubber with the tread of experimental tire Z also containing a conventional polybutadiene rubber.

Thus, the SIBR, basically, replaced at least a part of the butadiene/styrene rubber in the tread rubber blend.

The tires (X, Y and Z) were mounted on rims, inflated and submitted to testing. The test values for the control were normalized to a value of 100 for comparison purposes. The tire with the experimental tread was tested and its test values compared to the values of the control tire and reported relative to the normalized values of 100.

Surprisingly, the tire with the experimental tread rubber composition Y exhibited an equivalent rolling resistance and skid resistance while providing an improved treadwear as compared to control tire X. The tire with tread Z demonstrated an equivalent skid resistance, and increase in rolling resistance, yet a more improved treadwear as compared to control tire X. These results are considered to be an important departure from results which might ordinarily be expected.

The tread compositions for tires X, Y and Z were comprised of materials shown in the following Table 1.

TABLE 1

| Rubber Compound | Control (X) | Parts[1] Experimental | |
| --- | --- | --- | --- |
| | | (Y) | (Z) |
| Butadiene/styrene rubber[2] oil extended (70 parts rubber, 26.25 parts oil | 50 | 0 | 0 |
| Natural rubber | 50 | 10 | 50 |
| Polybutadiene rubber[3] (1 - 2% vinyl) | 0 | 20 | 0 |
| SIBR I [4] | 0 | 70 | 0 |
| SIBR II [4] | 0 | 0 | 50 |
| Oil, aromatic | 9 | 9 | 9 |
| Antioxidant | 3.2 | 3.2 | 3.2 |
| Wax | 3.8 | 3.8 | 3.8 |
| Stearic acid | 2 | 2 | 2 |
| Carbon black | 45 | 45 | 45 |
| Sulfur | 0.9 | 0.9 | 0.9 |
| Accelerator | 1.9 | 1.9 | 1.9 |
| Zinc Oxide | 3.5 | 3.5 | 3.5 |

1 - Most amounts rounded to nearest tenth of a part.
2 - Emulsion polymerization prepared SBR, oil extended with typical aromatic rubber processing oil.
3 - Conventional type polybutadiene rubber (low vinyl 1,2 and high cis 1,4-).
4 - Polymer is composed of about 20 mole percent units derived from styrene, about 40 mole percent units derived from isoprene and about 40 percent units derived from 1,3-butadiene and is the SIBR described in this specification, p rticularly of the type shown in Experiment A of TABLE 2 herein. SIBR I has a Tg of -42° C and SIBR II had a Tg of -31° C.

Table 2 illustrates various characteristics of the SIBR suitable for use in the treads of tires according to the present invention and also the type SIBR used in this Example to prepare the Experimental Y tire, namely, Experiment A:

TABLE 2

| Product Analysis | Exp A | Exp B | Exp C | Exp D | Exp E |
| --- | --- | --- | --- | --- | --- |
| % Styrene | 20 | 20 | 20 | 30 | 30 |
| % Butadiene | 40 | 40 | 40 | 35 | 35 |
| % Isoprene | 40 | 40 | 40 | 35 | 35 |
| Molecular Weight (Number Average) | 350,000 | 350,000 | 350,000 | 350,000 | 350,000 |
| Molecular Weight (Weight Average) | 600,000 | 600,000 | 600,000 | 600,000 | 600,000 |
| Glass Transition Temperature | -40° C | -20° C | -60° C | -40° C | -10° C |
| Mooney Viscosity (ML4 at 212° F) | 80 | 80 | 80 | 80 | 80 |

Table 3 illustrates various characteristics of the (Control X) and (Experimental Y and Z) rubber compound.

TABLE 3

| Property | Control X | Exp Y | Exp Z |
|---|---|---|---|
| Tensile (MN/m$^2$) | 21 | 20 | 22 |
| Elongation (%) | 500 | 450 | 490 |
| Mooney (ML-4) | 43 | 46 | 39 |
| Rebound (0°C) | 28 | 22 | 27 |
| Rebound (100°C) | 67 | 70 | 73 |
| Rheology (IV, 0.5% Strain) | | | |
| Tan Delta (0°C) | 0.256 | 0.308 | 0.279 |
| Tan Delta (60°C) | 0.185 | 0.167 | 0.161 |

Table 4 illustrates the rolling resistance, wet and dry skid resistance and treadwear values with the Experimental Tire Y compared to values of Control Tire X normalized to 100.

TABLE 4

| | | Experimental | |
|---|---|---|---|
| Measured Values | Control X | Y | Z |
| Rolling resistance (67" wheel) | 100 | 99[1] | 107 |
| Twin Roll | 100 | 103 | 106 |
| Wet skid resistance (20 mph) | 100 | 99 | 100 |
| Wet skid resistance (40 mph) | 100 | 98 | 100 |
| Wet skid resistance (60 mph) | 100 | 102 | 104 |
| Treadwear | 100 | 105[2] | 110[2] |

1 - a reduction in the Rolling Resistance value is an improvement.
2 - an increase in the Treadwear value is an improvement.

The treadwear was evaluated as a measure of reduction in tread depth after about 55,000 kilometers of test on a truck.

In this Example, the rolling resistance was measured by mounting and inflating the tire on a metal rim and allowing it to be turned by a 67 inch diameter dynamometer under about 80 percent of its rated load at a rate equivalent to a vehicular speed of 50 mph and the drag force measured. The test is believed to be somewhat standard.

The skid resistance was a standard test in which the tires are mounted on a weighted, drawn trailer at various speeds and brakes of the trailer applied and skid force (peak and slide) measured.

The treadwear was compared by actually mounting both control and experimental tires on a vehicle and driving it under controlled conditions, with the position of the tires on the vehicle being periodically positionally rotated.

In this Example, the SIBR is prepared by polymerizing styrene, isoprene and 1,3-butadiene in an essentially non-polar aliphatic solvent with an alkyl lithium catalyst, namely, butyl lithium with or without a modifier. Such modifier is usually a polar modifier which has an effect of randomizing or tapering the styrene portion of the rubber depending on the ratio of the lithium to modifier. A recommended weight ratio of lithium to modifier is 2/1 to 6/1, preferably 1.5/1 to 2.5/1 weight ratio.

Representative examples of such solvents are pentane, hexane, heptane, octane, isooctane and cyclohexane, of which hexane is preferred.

Representative examples of alkyl lithium catalysts are methyl lithium, ethyl lithium, propyl lithium, n-butyl lithium, 2-butyl lithium, t-butyl lithium and amyl butyl lithium. The n-butyl lithium is preferred.

The amount of catalyst is dependent upon the molecular weight desired for the polymerization. It is preferred that the temperature of the polymerization is maintained substantially constant throughout the polymerization in the range of about 10°C to about 120°C, preferably 60°C to 90°C.

When a polar modifier is used for randomizing or tapering the styrene such as, for example, chelating diamines or polar ether and oxygenated compounds, the amount of polar modifiers used depends largely on the desired Tg glass-transition temperatures. If a high Tg SIBR (-10°C to -20°C) is desired, the modifier used can be TMEDA (N,N,N¹,N¹-tetra ethylene diamine) or diglyme. If no modifier is used, the polymerization temperature can be adjusted to randomize the styrene or taper it. The SIBR randomization without the polar modifier, is conventionally made at polymerization temperature of 90°C to 150°C in continuous stirred reactors.

Representative examples of chelating diamines are N,N,N′,N′-tetramethylethylenediamine, dipiperidinethane, dimorpholine ethane and bis-dimethylpiperizane.

Representative examples of polar ether compounds are diglyme, monoglyme, tetraglyme and tetrahydrofuran.

Representative examples of oxygenated compounds are 2,3-dimethoxybenzene, tetrahydrofuran, and methylated polyvinyl acetate polymers.

Usually the styrene content tends to control the glass transition temperature. For high Tg (-10°C to -40°C) SIBR, the styrene content should be between 30-60 weight percent of the polymer. If a low Tg of the SIBR (-50°C to -70°C) is desired the styrene content may vary between 10 to 30 percent.

The resulting SIBR polymer (rubber) can be further characterized by its glass transition temperature based on the 1,2 bound butadiene plus styrene (formed when a modifier is used in the polymerization) in weight percent or 3,4 bound isoprene plus styrene content or both 1,2 bound butadiene and 3,4 bound isoprene plus styrene content.

High Tg SIBR polymer can have a low styrene content with high 3,4 bound isoprene content (from the isoprene component) and 1,2 bound butadiene (from the butadiene component) or high styrene with low 3,4 bound isoprene (in the isoprene component) and 1,2 bound butadiene (in the butadiene component) depending on the desired properties needed to be maximized.

Thus, if a relatively low Tg SIBR is desired, a high styrene content is the primary consideration. If a relatively high Tg SIBR is desired, at a constant or given styrene content, the primary consideration is for a high concentration of the sum of the 1,2-structure of the bound butadiene units plus the 3,4-structure of the bound isoprene units.

Tire treads having a high Tg (-30°C to -45°C) SIBR is considered desirable for high traction purpose. A low Tg (-70°C to -40°C) SIBR is desirable for tread wear purposes and a balanced property of SIBR of -20°C to -30°C is usually good for ice traction.

While certain representative embodiments and details have been described for the purpose of illustrating the invention, it will be apparent to those skilled in the art that various changes and modifications may be made therein without departing from the spirit or scope of the invention.

## Claims

1. A pneumatic tire (10) comprising a radial ply carcass structure (11) with a tread (32) disposed radially outwardly thereof, said tire having an aspect ratio in the range of .35 to .65, said tread (32) having at least two grooves (33,34,35,36) therein which extend circumferentially thereabout with at least one of said circumferentially extending grooves disposed on each side of an equatorial plane (EP) of the tire, a central portion (CP) of the tread being disposed between the axially outermost circumferentially extending grooves (33,36) on each side of the equatorial plane, characterized by said tire having a first tread radius (TR₁) in said central portion (CP) and portions (OP₁,OP₂) of the tread disposed axially outwardly of said central portion having tread radii (TR₂,TR₃) that are not greater than 25% of said first tread radius (TR₁), said central portion (CP) of the tread having an axial width in the range of 40% to 60% of the greatest axial width (TW) of a static footprint of the tire when the tire is mounted on its specified rim, inflated to its specified inflation pressure and subjected to its rated load for said inflation pressure, each pair (33,34;34,35;35,36) of axially next adjacent circumferentially extending grooves having a circumferentially extending array of traction elements (37,38,39) located therebetween, for each of said arrays the ratio of the number of traction elements (40A,40B,40C;41A,41B,41C;42A,42B,42C) in the array to the number of meters in the greatest circumference of the tire at its equatorial plane (EP) when the tire is mounted upon its specified rim and inflated to its specified inflation pressure but not subject to any load is in the range of 30 traction elements per meter of tire circumference to 45 traction elements per meter of tire circumference.

2. A pneumatic tire (10) according to claim 1 characterized by further comprising a pair of sidewall portions (12,13), said tread having a series of laterally extending grooves (45) therein, each said laterally extending groove extending from the equatorial plane (EP) of the tire to both of said sidewall portions and following a path that is oriented at progressively greater angles with respect to said equatorial plane (EP) as the axial distance from the equatorial plane becomes greater.

3. A pneumatic tire (10) according to either of the preceding claims characterized by each said circumferentially extending array (37,38,39) of traction elements having repeating design cycles placed continuously about the circumference of the tire, said design cycles having a total of three different design cycle lengths including a short length, a medium length and a long length that define a percent variation and percent unbalance, wherein the three design cycle lengths have a ratio of about 17-21-26.

4. A pneumatic tire (10) according to any of the preceding claims characterized by said tread being a sulfur cured rubber composition comprised of, based on 100 parts by weight rubber (phr), (A) about 10 to about 90 parts by weight of a styrene, isoprene, butadiene terpolymer rubber (SIBR), and (B) about 70 to about 30 weight percent of at least one of cis 1,4-polyisoprene rubber and cis 1,4-polybutadiene rubber wherein said SIBR rubber is comprised of (A) about 5 to about 40 weight percent bound styrene, (B) about 20 to about 60 weight percent bound isoprene and (C) about 10 to about 50 weight percent bound butadiene and is characterized by having a glass transition temperature (Tg) in the range of about -70° C to about -5° C and, further, the said bound butadiene structure contains about 10 to about 50 weight percent 1,2-vinyl units, the said bound isoprene structure contains about 10 to about 40 weight percent 3,4 units, and the sum of the weight percent 1,2-vinyl units of the bound butadiene and the weight percent 3,4 units of the bound isoprene is in the range of about 20 to about 90 percent.

5. A pneumatic tire (10) comprising a radial ply carcass structure (11) with a tread (32) disposed radially outwardly thereof, said tread having a central portion (CP) having an axial width in the range of 40% to 60% of the greatest axial width (TW) of a static footprint of the tire when the tire is mounted on its specified rim, inflated to its specified inflation pressure and subjected to its rated load for said inflation pressure, characterized by said tire having a first tread radius ($TR_1$) in said central portion (CP) and portions ($OP_1$,$OP_2$) of the tread disposed axially outwardly of said central portion (CP) having tread radii ($TR_2$,$TR_3$) that are not greater than 25% of said first tread radius ($TR_1$), said tread having a directional tread pattern which comprises circumferentially extending arrays (37,38,39) of traction elements (40A,40B,40C;41A,41B,41C;42A,42B,42C) with each said array having repeating design cycles placed continuously about the circumference of the tire, said design cycles having a total of three different design cycle lengths including a short length, a medium length and a long length that define a percent variation and percent unbalance, wherein the three design cycle lengths have a ratio of about 17-21-26, and said tread (32) is a sulfur cured rubber composition comprised of, based on 100 parts by weight rubber (phr), (A) about 10 to about 90 parts by weight of a styrene, isoprene, butadiene terpolymer rubber (SIBR), and (B) about 70 to about 30 weight percent of at least one of cis 1,4-polyisoprene rubber and cis 1,4-polybutadiene rubber wherein said SIBR rubber is comprised of (A) about 5 to about 40 weight percent bound styrene, (B) about 20 to about 60 weight percent bound isoprene and (C) about 10 to about 50 weight percent bound butadiene and is characterized by having a glass transition temperature (Tg) in the range of about -70° C to about -5° C and, further, the said bound butadiene structure contains about 10 to about 50 weight percent 1,2-vinyl units, the said bound isoprene structure contains about 10 to about 40 weight percent 3,4 units, and the sum of the weight percent 1,2-vinyl units of the bound butadiene and the weight percent 3,4 units of the bound isoprene is in the range of about 20 to about 90 percent.

6. A pneumatic tire (10) according to claim 5 characterized by said tire having an aspect ratio in the range of .35 to .65 and the central portion (CP) of the tread being disposed between a pair of grooves (34,35) in the tread which extend circumferentially about the tread with one of said grooves located on each side of the equatorial plane (EP) of the tire.

7. A pneumatic tire (10) according to either of claims 5 or 6 characterized by said tire having a speed rating of "V" or "Z".

8. A pneumatic tire (10) comprising a radial ply carcass (11) having at least one carcass ply (18,19) reinforced by cords selected from the group consisting of rayon and polyester, a belt structure (25) reinforced by metallic cables disposed radially outwardly of the radial ply carcass, an overlay structure (28) comprising nylon cords extending substantially parallel to the equatorial plane (EP) of the tire and located radially outwardly of said belt structure, and a tread (32) disposed radially outwardly of the overlay structure, said tire having an aspect ratio in the range of .35 to .65, said tread having at least two grooves (33,34,35,36) therein which extend circumferentially thereabout with at least one of said circumferentially extending grooves disposed on each side of an equatorial plane (EP) of the tire, a central portion (CP) of the tread being disposed between the axially outermost circumferentially extending grooves (33,36) on each side of the equatorial plane, characterized by said tire having a first tread radius ($TR_1$) in said central portion (CP) and portions ($OP_1$,$OP_2$) of the tread disposed axially outwardly of said central portion (CP) having tread radii (TR₁,TR₂) that are not greater than 25% of said first tread radius (TR₁), said central portion (CP) of the tread having an axial width in the range of 40% to 60% of the greatest axial width (TW) of a static footprint of the tire when the tire is mounted on its specified rim, inflated to its specified inflation pressure and subjected to its rated load for said inflation pressure, each pair of axially next adjacent circumferentially extending grooves (33,34;34,35;35,36) having a circumferentially extending array (37,38,39) of traction elements (40A,40B,40C;41A,41B,41C;42A,42B,42C) located therebetween, said tread having a directional tread design and each said circumferentially extending array of traction elements has repeating design cycles placed continuously about the circumference of the tire, said design cycles having a total of three different design cycle lengths including a short length, a medium length and a long length that define a percent variation and percent unbalance, wherein the three design cycle lengths have a ratio of about 17-21-26, and said tread (32) is a sulfur cured rubber composition comprised of, based on 100 parts by weight rubber (phr), (A) about 10 to about 90 parts by weight of a styrene, isoprene, butadiene terpolymer rubber (SIBR), and (B) about 70 to about 30 weight percent of at least one of cis 1,4-polyisoprene rubber and cis 1,4-polybutadiene rubber wherein said SIBR rubber is comprised of (A) about 5 to about 40 weight percent bound styrene, (B) about 20 to about 60 weight percent bound isoprene and (C) about 10 to about 50 weight percent bound butadiene and is characterized by having a glass transition temperature (Tg) in the range of about -70°C to about -5°C and, further, the said bound butadiene structure contains about 10 to about 50 weight percent 1,2-vinyl units, the said bound isoprene structure contains about 10 to about 40 weight percent 3,4 units, and the sum of the weight percent 1,2-vinyl units of the bound butadiene and the weight percent 3,4 units of the bound isoprene is in the range of about 20 to about 90 percent.

9. A pneumatic tire (10) according to claim 8 characterized in that for each of said arrays (37,38,39) the ratio of the number of traction elements (40A,40B,40C;41A,41B,41C;42A,42B,42C) in the array to the number of meters in the greatest circumference of the tire at its equatorial plane (EP) when the tire is mounted upon its specified rim and inflated to it specified inflation pressure but not subject to any load is in the range of 30 traction elements per meter of tire circumference to 45 traction elements per meter of tire circumference.

10. A pneumatic tire (10) according to claim 8 characterized by further comprising a pair of sidewall portions (12,13), said tread (32) having a series of laterally extending grooves (45) therein, each said laterally extending groove extending from the equatorial plane (EP) of the tire to both of said sidewall portions (12,13) and following a path that is oriented at progressively greater angles with respect to said equatorial plane as the axial distance from the equatorial plane becomes greater.

11. A pneumatic tire (10) according to claim 8 characterized by further comprising a pair of axially spaced apart annular beads (14,15), each said carcass ply (18,19) extending between the beads and having one of its axially outer portions folded radially and axially outwardly about each bead, an annular elastomeric member (20,21) having a modulus of at least 10 MPa at 200% elongation and a Shore A hardness of 90 is disposed inside of each of said carcass ply folds and has a radial extent of at least 15% of the section height of the tire.

12. A pneumatic tire (10) according to claim 8 characterized by said overlay structure (28) comprises a series of helical convolutions of a ribbon which comprises an elastomeric material reinforced by side-by-side nylon cords extending longitudinally of the ribbon.

13. A pneumatic tire (10) according to claim 12 characterized by adjacent turns of the ribbon being in an overlapping relationship.

14. A pneumatic tire (10) according to claim 13 characterized by the degree of overlap varying across the axial width of the overlay structure.

15. A pneumatic tire (10) according to claim 14 characterized by the number of radial layers of cords in the overlay structure (28) being greater at the axial edges of the belt structure than the average number of radial layers of cords in the remainder of the overlay structure.

FIG. 1

FIG. 2

FIG. 3

FIG. 4

EP 0 402 303 A1

FIG. 5

## DOCUMENTS CONSIDERED TO BE RELEVANT

EP 90630116.3

| Category | Citation of document with indication, where appropriate, of relevant passages | Relevant to claim | CLASSIFICATION OF THE APPLICATION (Int Cl⁵) |
|---|---|---|---|
| D | <u>US - A - 4 823 853</u><br>(HITZKY)<br>   * Totality * | | B 60 C 11/00<br>B 60 C 3/04<br>B 60 C 1/00 |
| Y | | 1,5,8-10 | |
| A | | 2,3,6,7 | |
| | -- | | |
| Y | <u>WO - A1 - 89/00 113</u><br>(SUMITOMO RUBBER INDUSTRIES)<br>   * Abstract; fig. 1 * | 1,5,8 | |
| | -- | | |
| Y | <u>EP - A2 - 0 263 054</u><br>(THE GOODYEAR TIRE & RUBBER COMPANY)<br>   * Examples 22-24 * | 5,8 | |
| A | | 4 | |
| | -- | | |
| Y | <u>EP - A2/A3 - 0 258 822</u><br>(CONTINETAL AG)<br>   * Totality * | 8-10 | TECHNICAL FIELDS SEARCHED (Int Cl⁵) |
| A | | 11-15 | |
| | ---- | | B 60 C<br>C 08 F<br>C 08 L |

The present search report has been drawn up for all claims

| Place of search<br>VIENNA | Date of completion of the search<br>14-09-1990 | Examiner<br>WIDHALM |
|---|---|---|